# EUROPÄISCHE PATENTANMELDUNG

(11) **EP 1 902 606 A1**
(43) Veröffentlichungstag der Anmeldung: **26.03.2008**
(21) Anmeldenummer: 07013087.7
(22) Anmeldetag: 04.07.2007
(51) Int. Cl.: A01B 79/00, G05B 15/02, H02B 15/02

(54) **Verfahren zur Steuerung und Überwachung einer Prozesskette zur Behandlung landwirtschaftlicher Produkte**

(30) Priorität: 20.09.2006 DE 102006044730
(71) Anmelder: CLAAS Selbstfahrende Erntemaschinen, 33428 Harsewinkel (DE)
(72) Erfinder: Wippersteg, Heinz-Hermann, 32257 Bünde (DE); Steckel, Thilo, 33330 Gütersloh (DE)
(74) Vertreter: Beckord, Klaus

(57) **Zusammenfassung**

Beschrieben wird ein Verfahren zur rechnerunterstützten Steuerung und Überwachung einer Prozesskette (P) zur Behandlung landwirtschaftlicher Produkte. Dabei werden in einer Speichereinrichtung Prozessdaten (D_{P}) für verschiedene Prozesse und Lagerungsdaten (D_{L}) für verschiedene Lagerorte innerhalb der Prozesskette (P) hinterlegt und es werden den einzelnen Prozessen und Lagerorten auf Basis der Prozessdaten (D_{P}) und Lagerungsdaten (D_{L}) Symbole (B₁, B₂, ..., B₅, E₁, E₂, H₁, H₂, L₁, L₂, ... L₁₀, R, S₁, S₂, ..., S₁₀, T₁, T₂, ..., T₃₄, Z₁, Z₂, ..., Z₁₉) zur Ausgabe auf einer graphischen Benutzeroberfläche (G) zugeordnet, welche die betreffenden Prozesse und Lagerorte repräsentieren. Die Symbole (B₁, B₂, ..., B₅, E₁, E₂, H₁, H₂, L₁, L₂, ..., L₁₀, R, S₁, S₂, ..., S₁₀, T₁, T₂, ..., T₃₄, Z₁, Z₂, ..., Z₁₉) werden auf der grafischen Benutzeroberfläche (G) so ausgegeben, dass die Symbole (B₁, B₂, ..., B₅, E₁, E₂, H₁, H₂, L₁, L₂, ..., L_{10,} R, S₁, S₂, ..., S₁₀, T₁, T₂, ..., T₃₄, Z₁, Z₂, ..., Z₁₉) von aufeinander folgenden Prozessen und Lagerorten grafisch miteinander verknüpft werden. Außerdem wird ein entsprechendes Steuerungs- und Kontrollsystem (1) zur Steuerung und Überwachung einer Prozesskette (K) zur Behandlung landwirtschaftlicher Produkte beschrieben.

## Beschreibung

Die Erfindung betrifft ein Verfahren zur rechnerunterstützten Steuerung und Überwachung einer Prozesskette zur Behandlung landwirtschaftlicher Produkte sowie ein hierfür geeignetes Steuerungs- und Kontrollsystem. Eine Behandlung eines landwirtschaftlichen Produkts in diesem Sinne umfasst dabei sämtliche Maßnahmen, die mit einem landwirtschaftlichen Produkt durchgeführt werden könnten, ausgehend von der eigentlichen Erzeugung auf dem Feld, worunter Prozesse wie Säen oder Setzen, Düngen, Spritzen, Ernten etc. zu fassen sind, über Lagerungsprozesse, Mischprozesse, Teil-oder Trennprozesse, Trocknungsprozesse, Weiterverarbeitungsprozesse wie Mahlen oder späteres Verbacken des Mehls bis hin zu den verschiedensten Lagerungs- und Transportprozessen zwischen den einzelnen Ver- und Bearbeitungsstufen.

Die Bedeutung der genauen Steuerung und Überwachung landwirtschaftlicher Produktionsprozesse nimmt aufgrund steigender Anforderungen seitens der Weiterverarbeiter, des Handels und der Verbraucher stetig zu. Insbesondere wird im Rahmen der Überwachung inzwischen eine fast lückenlose Dokumentation des gesamten Produktionsprozesses verlangt, um im Krisenfall auf Basis dieser Dokumentation eine Rückverfolgung zum Verursacher der Krise durchführen zu können. Für das Prozessmanagement in landwirtschaftlichen Produktionsprozessen sowie für die automatische Verfolgung von landwirtschaftlichen Produkten gibt es bereits rechnergestützte Systeme. Beispielsweise beschreibt die US 2003/0182260 A1 eine Methode und ein System zur automatischen Verfolgung von landwirtschaftlichen Produkten. In der US 2004/0258807 A1 werden ein Verfahren und ein System für die Verwaltung der Behandlung von landwirtschaftlichen Produkten beschrieben. Darüber hinaus gibt es inzwischen in der Praxis sog. IT-gestützte Farmmanagementsysteme wie z. B. elektronische Schlagkarteien, in denen protokolliert wird, welche landwirtschaftlichen Produkte auf welchen Feldern erzeugt werden und welche Mittel wie Saatgut, Dünger oder Pflanzenschutzmittel innerhalb des Produktionsprozesses hierfür eingesetzt wurden. Die Dokumentation bzw. Überwachung der einzelnen Systeme erfolgt dabei über eine Vielzahl von einzelnen Dialogen, die in ihrer Abfolge in der Regel nur von versierten Anwendern effizient genutzt werden können. Eine einfache und sichere Steuerung und Überwachung einer komplexen, vollständigen Prozesskette vom Ersterzeuger eines landwirtschaftlichen Produkts, beispielsweise einem landwirtschaftlichen Betrieb, über die Weiterverarbeiter wie z. B. Mühlen, Bäcker etc. sowie weitere Zwischenhändler bis hin zum Einzelhändler bzw. Verbraucher ist mit diesen Systemen aufgrund der Vielzahl von verschiedenen komplexen Dialogen nicht möglich.

Es ist daher eine Aufgabe der vorliegenden Erfindung, ein verbessertes Verfahren zur Steuerung und Überwachung einer Prozesskette der eingangs genannten Art sowie ein hierfür geeignetes Steuerungs- und Kontrollsystem anzugeben, mit denen sehr schnell und übersichtlich die gesamte Prozesskette gesteuert und überwacht werden kann.

Diese Aufgabe wird durch ein Verfahren gemäß Patentanspruch 1 sowie durch ein Steuerungs- und Kontrollsystem gemäß Patentanspruch 12 gelöst.

Bei dem erfindungsgemäßen Verfahren werden Prozessdaten für die verschiedenen Prozesse, welche Informationen über die einzelnen Aktionen enthalten, sowie Lagerungsdaten wie beispielsweise Positionsdaten der Lagerorte, gelagertes Material, Mengen, Lagerbedingungen wie Temperatur und Luftfeuchtigkeit etc. für verschiedene Lagerorte innerhalb der Prozesskette in einer Speichereinrichtung hinterlegt. Den einzelnen Prozessen und Lagerorten werden dann auf Basis der Prozessdaten und Lagerungsdaten Symbole (sogenannte "Icons") zur Ausgabe auf einer grafischen Benutzeroberfläche zugeordnet, welche die betreffenden Prozesse und Lagerorte repräsentieren. Die Symbole auf der grafischen Benutzeroberfläche werden dabei so ausgegeben, dass die Symbole von aufeinander folgenden Prozessen und Lagerorten grafisch miteinander verknüpft werden.

Ein zur Durchführung dieses Verfahrens geeignetes Steuerungs- und Kontrollsystem benötigt hierzu folgende Komponenten:
- Eine Schnittstellenanordnung, um Prozessdaten für verschiedene Prozesse und Lagerungsdaten für verschiedene Lagerorte innerhalb der Prozesskette zu erfassen. Hierbei kann es sich um eine oder mehrere Schnittstellen handeln. Beispielsweise kann die Schnittstellenanordnung mehrere Schnittstellen umfassen, um automatisch Daten zu übernehmen, welche mittels Sensoren an verschiedenen Arbeitsaggregaten oder Lagereinrichtungen bzw. Transporteinrichtungen erfasst werden, die innerhalb der Prozesskette verwendet werden. Des Weiteren kann die Schnittstellenanordnung auch eine Benutzerschnittstelle umfassen, über die entsprechende Daten eingegeben werden können. Ebenso kann es sich um ein Bussystem oder Ähnliches handeln, welches mit vorhandenen Systemen gekoppelt ist, die ebenfalls Dokumentationen innerhalb der Prozesskette durchführen, wie beispielsweise automatische Steuerungssysteme für Erntemaschinen, die bereits erwähnten Schlagkarteien bzw. Hofmanagement- oder Lagermanagementsysteme, um von diesen Systemen bereits erfasste Daten zu übernehmen.
- Eine Speichereinrichtung, um die Prozessdaten für die verschiedenen Prozesse und die Lagerungsdaten für die verschiedenen Lagerorte zu hinterlegen. Diese Speichereinrichtung kann auch mehrere Teil-Speichereinrichtungen umfassen bzw. so ausgebildet sein, dass sie auf verschiedene Speicher unterschiedlicher Rechner oder Systeme zugreift. Insbesondere ist es möglich, dass in der Speichereinrichtung ggf. auch nur Speicheradressen (Links) hinterlegt sind, um auf bereits an anderer Stelle gespeicherte Daten in Hofmanagementsystemen, Lagerungssystemen oder dergleichen über entsprechende Kommunikationsmittel, beispielsweise auch über das Internet, zuzugreifen.
- Eine Anzeigeeinrichtung, beispielsweise ein Display innerhalb eines Cockpits einer Erntemaschine, einen Monitor an einem Rechner eines Hofmanagementsystems oder Lagermanagementsystems oder eine transportable Anzeigeeinrichtung, wie z. B. ein Display eines Laptops oder dergleichen.
- Eine Grafikeinheit zur Generierung einer grafischen Benutzeroberfläche auf der Anzeigeeinrichtung, wobei die Grafikeinheit so ausgebildet ist, dass den einzelnen Prozessen und Lagerorten auf Basis der Prozessdaten und Lagerungsdaten Symbole zur Ausgabe auf der grafischen Benutzeroberfläche zugeordnet werden, welche die betreffenden Prozesse und Lagerorte repräsentieren, und dass die Symbole auf der grafischen Benutzeroberfläche so ausgegeben werden, dass die Symbole von aufeinander folgenden Prozessen und Lagerorten grafisch miteinander verknüpft werden.

Die gesamte zu steuernde und zu überwachende Prozesskette wird so innerhalb eines Netzdiagramms auf der Anzeigeeinrichtung abgebildet. Dies sorgt dafür, dass der Benutzer problemlos den Überblick über die gesamte Prozesskette behält und den Prozess effektiv steuern und überwachen kann.

Die abhängigen Ansprüche und die weitere Beschreibung enthalten besonders vorteilhafte Ausgestaltungen und Weiterbildungen der Erfindung, wobei das erfindungsgemäße Steuerungs- und Kontrollsystem auch entsprechend den abhängigen Verfahrensansprüchen weitergebildet sein kann.

In der Regel ist es innerhalb einer Prozesskette immer wieder nötig, die landwirtschaftlichen Produkte zwischen zwei Verarbeitungs- bzw. Bearbeitungsprozessen zwischenzulagern bzw. in einem Transportprozess von einem Lagerort zum anderen zu transportieren. Um diese realen Bedingungen für den Benutzer auf der grafischen Benutzeroberfläche abzubilden, sind vorzugsweise bestimmten Prozessen Symbole zugeordnet, mit denen verschiedenen Lagerorten und/oder anderen Prozessen zugeordnete Symbole auf der grafischen Benutzeroberfläche untereinander verknüpft sind. Das heißt, es können beispielsweise für bestimmte Transportarten als Symbol bestimmte Linien vorgesehen werden. So könnte z. B. für einen einfachen Transport eine durchgezogene Linie verwendet werden, für einen Kühltransport eine Doppellinie etc. Diese Linien verbinden dann Symbole für bestimmte Lagerungsorte, z. B. zwei Symbole, die jeweils Silos beim Herstellerbetrieb bzw. beim Weiterverarbeiter darstellen.

Um eine besonders effektive Steuerung und Überwachung des Prozesses mit Hilfe der Erfindung zu ermöglichen, sind ganz besonders bevorzugt zumindest bestimmte Symbole auf der grafischen Benutzeroberfläche mittels eines Bedienelements aktivierbar, so dass dann Prozessdaten und/oder Lagerdaten und/oder Steuerbefehle bzw. darauf basierende Daten erfasst oder ausgegeben werden können. Eine bevorzugte Möglichkeit einer solchen Aktivierung kann beispielsweise darin bestehen, dass durch "Anklicken" eines Symbols eines bestimmten Prozesses oder Lagerungsorts auf der Benutzeroberfläche ein kontextabhängiges Dialog-Fenster geöffnet wird, über das dann detailliert Daten betreffend den dahinter liegenden Prozess ausgegeben werden bzw. weitere Daten oder Steuerbefehle eingegeben werden können. Dabei können prinzipiell beliebige Dialoge aufgerufen werden, die im Zusammenhang mit dem Prozess oder Lagerort stehen, welcher durch das betreffende Symbol repräsentiert wird. Dies ermöglicht eine intuitive Bedienung des gesamten Systems.

Insbesondere können die Daten und Steuerbefehle, die bei der Aktivierung eines Symbols aus- oder eingegeben werden, jeweils Angaben für verschiedene Chargen enthalten, die den bestimmten Prozess bzw. das bestimmte Lager durchlaufen haben. Ebenso kann es sich um Daten und Steuerbefehle über Prozesse handeln, die innerhalb des Lagers bzw. des Prozessaggregats zwischen der Bearbeitung bzw. Lagerung zweier Chargen durchgeführt wurden oder durchgeführt werden sollen, wie z. B. Reinigungen etc.

Besonders bevorzugt können auf Basis von erfassten Steuerbefehlen auch automatisch Steuersignale generiert werden und an in der Prozesskette zur Verfügung stehende Arbeitsaggregate übermittelt werden. Unter Arbeitsaggregaten sind hierbei u. a. Landmaschinen, Transporteinrichtungen wie Transportfahrzeuge, Transportbänder etc., Ent- und Überladeaggregate wie z. B. Ventile an Silos, Kippen und Ähnliches sowie Einrichtungen zu verstehen, um das Erntegut besonders zu behandeln, wie Trockner, Heizungen, Lüfter etc.. Alle diese aktivierbaren Komponenten können bei dieser Variante des erfindungsgemäßen Verfahrens über das Steuerungs- und Kontrollsystem automatisch bequem angesteuert werden. Erforderlich ist hierzu lediglich, dass das Steuerungs- und Kontrollsystem mit einer entsprechenden Signalgeneratoreinheit versehen ist, welche die Steuerbefehle in für die einzelnen Aggregate geeignete Steuersignale umsetzt und entsprechende Signalschnittstellen aufweist, um diese Steuersignale an die jeweiligen Arbeitsaggregate zu senden.

Bei dieser Variante kann der Bediener des Steuerungs- und Kontrollsystems beispielsweise einfach ein Symbol für einen bestimmten Lagerort aktivieren und dann z. B. einen Steuerbefehl eingeben, dass eine bestimmte Menge des gelagerten Ernteguts zu einem bestimmten weiteren Lagerort eines Händlers zu transportieren ist. Es wird dann automatisch ein entsprechendes Steuersignal generiert und an eine Transporteinrichtung übermittelt, welche dafür sorgt, dass die gewünschte Menge des Ernteguts vom ersten Lagerort zum zweiten Lagerort gebracht wird. Findet das Ganze innerhalb einer Lagereinrichtung - z. B. zwischen zwei Silos - statt und existieren geeignete Transportbänder oder Ähnliches zwischen den Silos, kann dieser Prozess in der Regel vollautomatisch ablaufen. D. h. über die Steuersignale werden dann die betreffenden Ventile, Transportbänder etc. angesteuert. Sofern es sich um eine längere Transportstrecke handelt, für die ein Transportfahrzeug benötigt wird, kann beispielsweise das Steuersignal an ein Display oder einen Drucker im Cockpit des Fahrzeugs oder an eine sonstige Ausgabeeinheit, zu die der Fahrer des Transportfahrzeugs Zugriff hat, übermittelt werden und an diesem ein entsprechender Transportbefehl für den Fahrer ausgegeben werden.

Das System ist besonders bevorzugt so aufgebaut, dass das Netzdiagramm, welches die gesamte Prozesskette abbildet, dynamisch erweitert wird, wenn neue Glieder in der Prozesskette hinzukommen. Das heißt, es wird bevorzugt auf Basis von Prozessdaten und/oder Lagerdaten und/oder Steuerbefehlen und/oder darauf basierenden Daten, welche nach einer Aktivierung eines Symbols eines ersten Prozesses oder Lagerorts mittels der grafischen Benutzeroberfläche erfasst werden, ein entsprechendes Symbol für zumindest einen weiteren Prozess oder Lagerort auf der grafischen Benutzeroberfläche generiert und mit dem Symbol des ersten Prozesses oder Lagerorts verknüpft.

Bei einer bevorzugten Weiterbildung des erfindungsgemäßen Verfahrens werden auf Basis eines Verfolgungs-Steuerbefehls, den der Bediener beispielsweise nach Aktivieren eines Symbols eingeben kann, alle in direkter Linie innerhalb einer Prozesskette verknüpften Symbole, ausgehend von einem Startsymbol, z. B. dem Symbol, an dem der Bediener den Verfolgungssteuerbefehl eingegeben hat, in zumindest einer bestimmten Richtung, d. h. vorwärts und/oder rückwärts, in der Prozesskette markiert. Diese Markierung kann positiv erfolgen, indem die betreffenden Symbole hervorgehoben werden. Es kann aber auch eine negative Markierung erfolgen, indem z. B. alle anderen Symbole abgeschwächt oder evtl. sogar ganz ausgeblendet werden. Aktiviert beispielsweise der Benutzer das Symbol eines Silos in einem Lager eines Landhandels, so kann er sich durch einen entsprechenden Rückverfolgungs-Steuerbefehl sämtliche Herkunftsorte und Zwischenhändler bzw. Weiterverarbeiter in der Prozesskette anzeigen lassen, die mit dem betreffenden Produkt bzw. den Vorprodukten dieses Produkts zusammenhängen.

So ist es z. B. möglich, das Symbol für ein bestimmtes Lager zu aktivieren, wodurch dann beispielsweise alle Chargen angezeigt werden, die innerhalb eines auswählbaren Zeitraums dieses Lager durchlaufen haben. Der Bediener kann dann eine Charge auswählen und es wird daraufhin die komplette Prozesskette vom Erzeuger bis zu diesem Lager angezeigt (Rückwärtsverfolgung). Ebenso ist es auch möglich, dass der Bediener sich anzeigen lässt, welche weiteren Schritte ausgehend von diesem Lager die Charge durchlaufen hat, d. h. wo das landwirtschaftliche Produkt letztlich zum Endverbraucher gelangt ist (Vorwärtsverfolgung).

Bei einer bevorzugten Variante ist es möglich, dass auf Basis eines Verfolgungs-Steuerbefehls nur solche Symbole markiert werden, deren Prozesse oder Lagerorte ein bestimmtes Merkmal oder eine bestimmte Merkmalskombination aufweisen. Eine solche bedingte Rück- oder Vorwärtsverfolgung kann mit beliebiger Fragestellung erfolgen. So können beispielsweise alle Teilketten innerhalb der Prozesskette angezeigt werden, in denen ein bestimmtes Pflanzenschutzmittel verwendet wurde oder für die die Lagerreinigungsdokumente nicht durchgängig vorliegen etc.

Die Ausgabe der Prozesskette in Form von Symbolen auf der grafischen Benutzeroberfläche kann auf verschiedenste Weise erfolgen. So kann zum einen eine rein logische Darstellung erfolgen, bei der einfach nur die Symbole passend angeordnet und untereinander vernetzt in einer von links nach rechts oder von oben nach unten durchlaufenden Kette angezeigt werden. Bevorzugt werden dabei die Prozesse und Lagerorte jeweils bestimmten Prozessbereichen zugeordnet und die zugehörigen Symbole auf der grafischen Benutzeroberfläche entsprechend gruppiert positioniert. Dabei ist es vorzugsweise auch möglich, dass je nach Komplexität und Länge der Prozesskette die Symboldarstellung auf unterschiedlicher Tiefe erfolgt. So können beispielsweise auf einer ersten Darstellungsebene Symbole für einzelne Betriebe und Lagerungsorte dargestellt sein. In einer Art "Zoomfunktion" kann dann eine detailliertere Ebene ausgewählt werden, bei der die einzelnen Schläge eines Erzeugerbetriebs oder die einzelnen Lagerorte eines Landhandels als einzelne, untereinander vernetzte Symbole angezeigt werden und z. B. nicht mehr die Symbole des Erzeugerbetriebs und des Landhandels.

In der Regel sind die Prozesse und/oder Lagerorte mit geografischen Ortsdaten verknüpft. D. h. im System ist genau hinterlegt, welcher Prozess an welchem geografischen Ort stattfindet bzw. es sind die genauen Positionsdaten der einzelnen Lager hinterlegt. Ebenso sind in der Regel auch die Fahrtrouten beim Transport bekannt. Daher können bei einer bevorzugten Variante die Symbole auf der grafischen Benutzeroberfläche auch in einem kartografischen Umfeld ausgegeben werden. Die Symbole werden dabei innerhalb einer Karte des Gebiets angezeigt, in dem die betreffenden Prozesse stattfinden bzw. in dem sich die Lagerorte befinden.

Besonders bevorzugt erlaubt das erfindungsgemäße Steuerungs- und Kontrollsystem eine Umstellung zwischen einer rein logischen Netzdarstellung und einer solchen kartografischen Darstellung.

Bei einer kartografischen Darstellung ist es auch möglich, dass die Symbole für bestimmte Prozesse oder Lagerorte jeweils Begrenzungsmarkierungen eines innerhalb der geografischen Karte dargestellten Bereichs umfassen, an dem der betreffende Prozess durchgeführt wird bzw. sich der betreffende Lagerort befindet. Bei diesen Begrenzungsmarkierungen, welche letztlich entweder selber die Symbole bilden oder Teil der Symbole sind, kann es sich beispielsweise um Umrisslinien eines Schlags, Hofgrenzen, Gebäudeumrisse, markierte Transportwege im Straßennetz etc. handeln.

Auch bei einer solchen Kartendarstellung gibt es bevorzugt eine Zoomfunktion, wobei zum einen ein vergrößerter Ausschnitt der Karte angezeigt und zum anderen auch eine andere Symbolebene erreicht werden kann, indem Symbole, welche beispielsweise einen landwirtschaftlichen Erzeugerbetrieb repräsentieren, in mehrere Einzelsymbole für den Hof und dessen Lagerstellen sowie die einzelnen Schläge und die Transportlinien zwischen diesen Symbolen ersetzt werden.

In größeren landwirtschaftlichen Betrieben und besonders in Erzeuger- oder Händlergruppen spielt die Benutzerverwaltung eine besondere Rolle. In der Regel ist es nicht erwünscht, dass jede Person überall Eintragungen durchführen bzw. Steuerbefehle geben oder alle Informationen abrufen darf. Um die Benutzerrechte zu berücksichtigen, erfolgt daher die Anzeige eines Symbols auf der grafischen Benutzeroberfläche und/oder die Aktivierbarkeit eines Symbols basierend auf Autorisierungsdaten eines Benutzers. Bei diesen Autorisierungsdaten kann es sich beispielsweise um einen bestimmten Zulassungscode wie eine PIN oder dergleichen handeln, die vom Benutzer entweder bei einer Anmeldung im System oder direkt bei Ausführen einer bestimmten Aktion, wie beispielsweise einem Rückverfolgungsbefehl, einzugeben sind. Grundsätzlich können diese Zugriffsrechte aber auch bereits in einem Rechner oder einer zentralen Steuereinheit des Systems hinterlegt sein, so dass beim Anmelden im System von einem bestimmten Terminal aus dem Benutzer gleich die passenden Benutzerrechte zugeordnet werden können. Ebenso ist zur Sicherheit die Erfassung von biometrischen Daten des Benutzers bei der Anmeldung oder vor bestimmten Zugriffen möglich. Verschiedenste Verfahren hierzu sind dem Fachmann bekannt.

Die Berechtigung, auf bestimmte Bereiche zuzugreifen bzw. Informationen abzufragen, kann auch auf der grafischen Benutzeroberfläche passend visualisiert werden. So können z. B. die nicht berechtigten Bereiche in einer anderen Darstellungsweise angezeigt werden, z. B. grau eingefärbt. Ebenso ist es möglich, in bestimmten Fällen bestimmte Bereiche, auf die der Nutzer keinen Zugriff hat bzw. die er nicht kennen soll, gar nicht erst darzustellen, d. h. die entsprechenden Symbole auszublenden.

Das erfindungsgemäße Steuerungs- und Kontrollsystem kann entweder insgesamt in einer zentralen Steuereinrichtung realisiert sein. Es ist aber auch möglich und in vielen Fällen sogar sinnvoll, dass die einzelnen Komponenten des Steuerungs- und Kontrollsystems auf verschiedene räumlich getrennte Einrichtungen verteilt sind, welche durch entsprechende Kommunikationsmittel wie Funk, Internet etc. miteinander in Verbindung stehen. Insbesondere ist es nicht erforderlich, dass die Speichereinrichtung, um die Prozessdaten für die verschiedenen Prozesse und Lagerungsdaten zu hinterlegen, die Grafikeinheit sowie die Anzeigeeinrichtung in einer physikalischen Einheit kombiniert sind, sondern diese Komponenten können auch in verschiedensten physikalischen Einheiten realisiert sein. So kann sich beispielsweise die Anzeigeeinrichtung in einer Landmaschine befinden oder als portable Anzeigeeinrichtung ausgebildet sein, welche entsprechende Befehle zur Generierung der grafischen Benutzeroberfläche von einer entfernteren Grafikeinheit in einem Rechner erhält. Insbesondere kann das Steuerungs- und Kontrollsystem auch mehrere Schnittstellenanordnungen, Speichereinrichtungen, Anzeigeeinrichtungen und Grafikeinheiten umfassen, die untereinander in Kommunikation stehen und die beispielsweise für verschiedene Erzeugerbetriebe, Weiterverarbeiter, Händler etc. zur Verfügung stehen.

Die Speichereinrichtung kann wiederum in einem Zentralrechner realisiert sein, mit dem verschiedene Grafikeinheiten bei verschiedenen Erzeugern, Weiterverarbeitern und Händlern verbunden sind. Es ist so möglich, dass die verschiedenen Erzeuger, Weiterverarbeiter und Händler auf eine gemeinsame Speichereinrichtung zugreifen bzw. dort die Daten einpflegen und die vorhandenen Prozessdaten und Lagerungsdaten jeweils für ihre Zwecke nutzen.

Es wird an dieser Stelle ausdrücklich auch darauf hingewiesen, dass die Grafikeinheit nicht zwingend aus einer einzelnen Komponente bestehen muss, sondern dass auch diese aus mehreren Teilkomponenten bestehen kann. Dabei kann beispielsweise auch ein Teil der Grafikeinheit, z. B. eine Grafikschnittstelle, welche die eigentliche grafische Ausgabe bewirkt, innerhalb der Anzeigeeinrichtung integriert sein, wobei ein anderer Teil der Grafikeinheit, welcher die Symbole mit den Prozess- und Lagerorten verknüpft und die Art der Symbole und deren Verknüpfungen untereinander logisch vorgibt, in einem Zentralrechner realisiert sein kann.

Die Erfindung wird im Folgenden unter Hinweis auf die beigefügten Figuren anhand von Ausführungsbeispielen noch einmal näher erläutert. Hieraus ergeben sich auch weitere Einzelheiten und Vorteile der Erfindung. Es zeigen:
Figur 1 eine schematische Darstellung eines erfindungsgemäßen Steuerungs- und Kontrollsystems;
Figur 2 eine schematische Darstellung einer Anzeigeeinrichtung mit einer grafischen Benutzeroberfläche mit einem Beispiel für die Anzeige einer Prozesskette in einem ersten Bedienzustand;
Figur 3 eine Darstellung der Anzeigeeinrichtung mit der grafischen Benutzeroberfläche gemäß Figur 2 in einem weiteren Bedienzustand;
Figur 4 eine Darstellung der Anzeigeeinrichtung mit der grafischen Benutzeroberfläche gemäß Figur 2 in einem dritten Bedienzustand;
Figur 5 eine Darstellung der Anzeigeeinrichtung mit der grafischen Benutzeroberfläche gemäß Figur 2 in einem vierten Bedienzustand;
Figur 6 eine Darstellung der Anzeigeeinrichtung mit der grafischen Benutzeroberfläche gemäß Figur 2 in einem fünften Bedienzustand;
Figur 7 eine Darstellung der Anzeigeeinrichtung mit der grafischen Benutzeroberfläche gemäß Figur 2 in einem sechsten Bedienzustand;
Figur 8 eine Darstellung einer grafischen Benutzeroberfläche, bei der die Symbole in einem kartografischen Umfeld dargestellt werden;
Figur 9 ein weiteres Ausführungsbeispiel für die Darstellung der Symbole in einem kartografischen Umfeld.

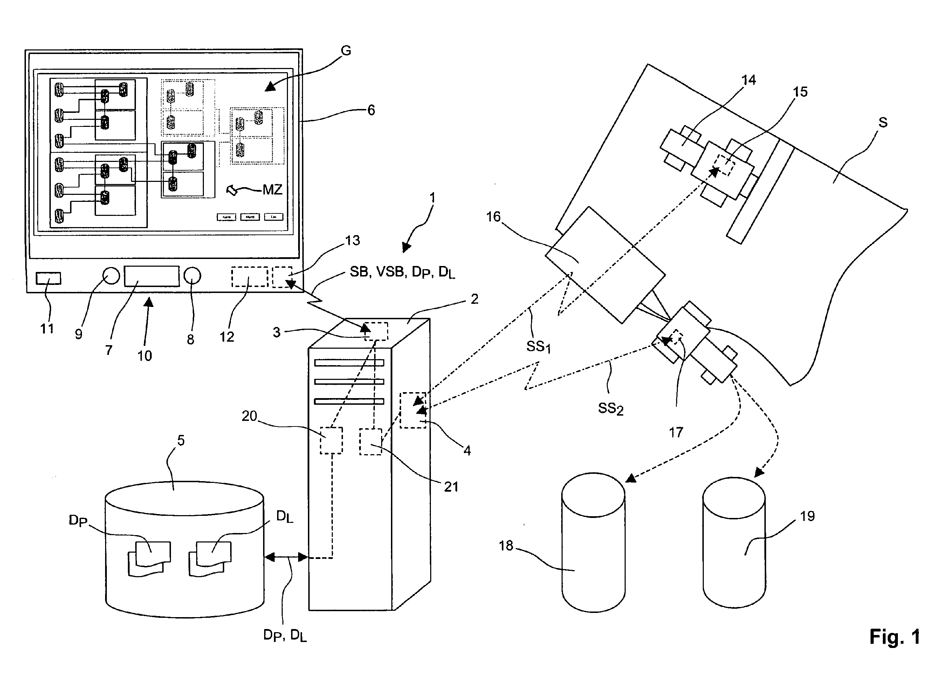

Figur 1 zeigt eine besonders einfache Variante eines erfindungsgemäßen Steuerungs- und Kontrollsystems 1. Wesentliche Komponenten dieses Steuerungs- und Kontrollsystems 1 sind hier ein Zentralrechner 2 mit einer daran angeordneten oder ggf. auch darin integrierten Speichereinrichtung 5 und einer Anzeigeeinrichtung 6. Die Anzeigeeinrichtung 6 ist hier als transportable Anzeigeeinrichtung 6 ausgebildet. Beispielsweise kann es sich hierbei um ein Display-Board handeln, welches über eine Funkschnittstelle 13 mit einer entsprechenden Funkschnittstelle 3 im Zentralrechner 2 verbunden ist. Diese mobile Anzeigeeinrichtung 6 kann z. B. in einer Fahrerkabine eines landwirtschaftlichen Fahrzeugs installiert oder tragbar ausgebildet sein.

Auf der Anzeigeeinrichtung 6 wird eine grafische Benutzeroberfläche G erzeugt, auf der - wie nachfolgend noch genauer erläutert wird - Symbole der Prozesskette P untereinander verknüpft angezeigt werden. Die grafische Benutzeroberfläche G besitzt in üblicher Weise einen Mauszeiger MZ. Dieser ist über eine Bedieneinheit 10, welche in die Anzeigeeinrichtung 6 integriert ist (hier bestehend aus einem Touchpad 7 und zwei Tasten 8, 9, welche die "Maustasten" ersetzen) bedienbar. Damit kann der Mauszeiger MZ auf der grafischen Benutzeroberfläche G in üblicher Weise navigiert werden und dort durch Anklicken bestimmte Symbole aktiviert werden, wie dies ebenfalls nachfolgend noch genauer erläutert wird. Anstelle der Bedieneinrichtung 10 kann ggf. auch die gesamte Anzeigeeinrichtung 6 als Touchdisplay ausgebildet sein, so dass der Bediener direkt mit dem Finger oder einem Stift oder dergleichen Symbole aktivieren kann.

Die mobile Anzeigeeinrichtung 6 weist hier auch einen Ein/Ausschalter 11 auf. Sie kann selbstverständlich darüber hinaus noch weitere Bedienelemente aufweisen, um beispielsweise Kontrast, Helligkeit etc. einzustellen. Ebenso kann an diese Anzeigeeinrichtung 6 auch an eine Tastatur oder Ähnliches gekoppelt sein. Weiterhin können auch noch andere Einrichtungen an die Anzeigeeinrichtung gekoppelt sein, beispielsweise eine Sprachein-/ausgabeeinrichtung etc. All diese Komponenten sind aber der besseren Übersichtlichkeit wegen hier nicht dargestellt.

In der Speichereinrichtung 5, welche hier als externer Speicher dargestellt ist, sind verschiedene Prozessdaten D_{P} und Lagerungsdaten D_{L} über die die innerhalb der Prozesskette P ablaufenden Prozesse bzw. die Lagerstellen hinterlegt, an denen das landwirtschaftliche Produkt bzw. die daraus erhaltenen Produkte zwischengelagert werden.

Der Zentralrechner 2 selbst kann ein weitgehend handelsüblicher Rechner sein, welcher mit entsprechenden Zusatzkomponenten ausgestattet wird, um innerhalb des Steuerungs- und Kontrollsystems als zentrale Rechnereinheit agieren zu können. Diese zusätzlichen Komponenten können teils in Hardware, teils in Software ausgebildet sein.

Neben der bereits erwähnten Funkschnittstelle 3 zur Kommunikation mit der Anzeigeeinrichtung 6 besitzt dieser Zentralrechner 2 eine weitere Funkschnittstelle 4, um mit entsprechenden Funkschnittstellen 15, 17 in landwirtschaftlichen Maschinen 14 bzw. Transportfahrzeugen 16 kommunizieren zu können. Weiterhin weist der Zentralrechner 2 eine erste Teil-Grafikeinheit 20 auf, welche mit einer anderen Teil-Grafikeinheit 12 innerhalb der Anzeigeeinrichtung 6 zusammenwirkt, um die grafische Benutzeroberfläche in der gewünschten Weise zu generieren. Dabei ordnet die Teil-Grafikeinheit 20 innerhalb des Zentralrechners 2 den einzelnen Prozessen und Lagerorten in der Prozesskette jeweils Symbole auf Basis der Prozessdaten D_{P} und Lagerungsdaten D_{L} zu, welche die betreffenden Prozesse und Lagerorte repräsentieren. Sie gibt außerdem vor, in welcher Verknüpfung diese Symbole auf der grafischen Benutzeroberfläche G ausgegeben werden. Diese Daten werden dann über die Funkschnittstelle 3, 13 an die Teil-Grafikeinheit 12 der Anzeigeeinrichtung 6 übergeben, die beispielsweise wie eine Grafikkarte wirkt und entsprechend die grafische Benutzeroberfläche mit den passend angeordneten verknüpften Symbolen auf der Anzeigeeinrichtung 6 generiert.

Über die Anzeigeeinrichtung 6, welche über die grafische Benutzeroberfläche G auch als Benutzerschnittstelle wirkt, kann der Benutzer nicht nur Daten abfragen, sondern auch Daten eingeben und insbesondere Steuerungsbefehle erteilen. Das genaue Verfahren zur Eingabe dieser Daten wird später noch anhand von Beispielen erläutert. Dabei kann der Benutzer z. B. Steuerbefehle SB geben, um die landwirtschaftliche Maschine 14, hier ein Feldhäcksler 14, der gerade dabei ist, einen Schlag S abzuernten, oder ein Transportfahrzeug 16, welches das abgeerntete Erntegut zu verschiedenen Lagerstellen, hier den Silos 18, 19, bringt, anzusteuern. So kann beispielsweise durch entsprechende Eingabe eines Steuerbefehls nach Aktivierung eines Symbols, welches den Schlag S repräsentiert, eingegeben werden, dass das Erntegut in das Silo 18 zu bringen ist. Ein entsprechender Steuerbefehl wird dann in einer geeigneten Steuersignalermittlungseinheit 21 im Zentralrechner 2 in ein Steuersignal SS₂ für das Transportfahrzeug 16 umgesetzt und mittels der Schnittstelle 4 an die entsprechende Schnittstelle 17 des Transportfahrzeugs 16 übermittelt. Dort wird das Steuersignal SS₂ beispielsweise genutzt, um ein Display für den Fahrer passend anzusteuern, mit dem diesem der Befehl erteilt wird, das Silo 18 anzufahren. Ebenso könnte über einen anderen Steuerbefehl ein Steuersignal SS₁ an die landwirtschaftliche Maschine 14 bzw. deren Fahrer übermittelt werden, damit nach der Aberntung des Schlages S beispielsweise ein ganz bestimmter weiterer Schlag angefahren und abgeerntet wird.

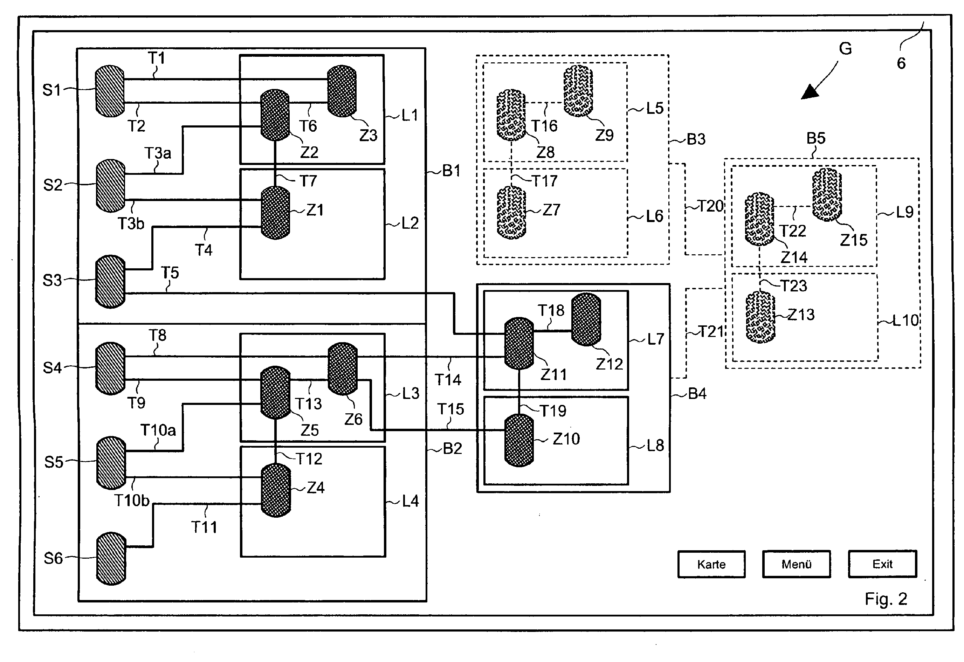

Figur 2 zeigt ein Ausführungsbeispiel für eine auf der grafischen Benutzeroberfläche G der Anzeigeeinrichtung 6 dargestellte Prozesskette. Hierbei handelt es sich um eine rein logische Darstellung der Prozesskette, wobei die einzelnen Prozesse und Lagerorte jeweils bestimmten Prozessbereichen zugeordnet sind und dementsprechend die zugehörigen Symbole B₁, B₂, ..., B₅, L₁, L₂, ..., L₁₀, S₁, S₂, ..., S₆, T₁, T₂, ..., T₂₃, Z₁, Z₂, ..., Z₁₅ auf der grafischen Benutzeroberfläche G gruppiert positioniert sind. Die Prozesskette verläuft hierbei von links nach rechts. Die Symbole B₁, B₂, ..., B₅, L₁, L₂..... L₁₀, S₁, S₂, ..., S₆, T₁, T₂, ..., T₂₃, Z₁, Z₂, ..., Z₁₅ repräsentieren hier verschiedene Schläge S₁, S₂, ..., S₆, Lagerzellen Z₁, Z₂..... Z₁₅, Lager L₁, L₂, ..., L₁₀, Transportprozesse T₁, T₂, ..., T₂₃, sowie Erzeuger-, Weiterverarbeitungs- und Händlerbetriebe B₁, B₂, ..., B₅, welche in der folgenden Beschreibung der Einfachheit halber auch mit den Bezugszeichen der zugehörigen Symbole B₁, B₂, ..., B₅, L₁, L₂, ..., L₁₀, S₁, S₂, ..., S₆, T₁, T₂, ..., T₂₃, Z₁, Z₂, .... Z₁₅ bezeichnet werden.

Dargestellt sind auf der ganz linken Seite sechs Symbole S₁, S₂, S₃, S₄, S₅, S₆, die jeweils verschiedene Schläge symbolisieren. Diese Schläge S₁, S₂, S₃ gehören zu einem ersten landwirtschaftlichen Erzeugerbetrieb B₁, die Schläge S₄, S₅, S₆ zu einem zweiten landwirtschaftlichen Erzeugerbetrieb B₂. Diese Erzeugerbetriebe B₁, B₂ haben jeweils zwei Lager L₁, L₂, L₃, L₄. Jedes Lager L₁, L₂, L₃, L₄ kann eine oder mehrere Lagerzellen Z₁, Z₂, Z₃, Z₄, Z₅, Z₆, beispielsweise Silos, Container etc., umfassen. Die Transportprozesse von den einzelnen Schlägen S₁, S₂, S₃, S₄, S₅, S₆ zu den verschiedenen Lagerzellen Z₁, Z₂, Z₃, Z₄, Z₅, Z₆ sind jeweils durch Symbole T₁, T₂, ..., T₁₃ in Form von einfachen Linien dargestellt.

Des Weiteren sind in dem gezeigten Ausführungsbeispiel zwei Weiterverarbeitungsbetriebe B₃, B₄ mit mehreren Lagern L₅, L₆, L₇, L₈ dargestellt, die wiederum verschiedene Lagerzellen Z₇, Z₈, Z₉, Z₁₀, Z₁₁, Z₁₂ aufweisen können.

Am Ende der sehr vereinfachten Kette steht hier ein Händlerbetrieb B₅, welcher ebenfalls zwei Lager L₉, L₁₀ besitzt, die wiederum eine oder mehrere Lagerzellen Z₁₃, Z₁₄, Z₁₅ umfassen. Auch zu dem Weiterverarbeitungsbetrieben B₃, B₄ bzw. intern in den Weiterverarbeitungsbetrieben B₃, B₄ sowie von den Weiterverarbeitungsbetrieben B₃, B₄ zum Händler B₅ sind jeweils die Transporte in Form von Liniensymbolen T₁₄, T₁₅, ..., T₂₂ dargestellt.

Anhand des in Figur 2 dargestellten Beispiels ist auch gezeigt, wie Bereiche, zu deren Aktivierung bzw. Datenabfrage und -eingabe der Benutzer keine Berechtigung hat, in einer anderen Darstellungsweise angezeigt werden. Hier erfolgt dies für den Bereich des ersten Weiterverarbeitungsbetriebs B₃ und des Händlers B₅ durch eine hellgraue Darstellung.

Die Darstellung kann auf unterschiedlichen Ebenen erfolgen. So kann der Benutzer innerhalb eines Menüs, welches durch einen entsprechenden Menü-"Button" in der unteren rechten Ecke der grafischen Benutzeroberfläche anwählbar ist, auf eine andere Ebene "springen". Beispielsweise kann der Bediener auf eine höhere Ebene springen, in der die Erzeuger B₁, B₂, die Weiterverarbeiter B₃, B₄ und der Händler B₅ jeweils nur als kleine, einzelne Symbole (ohne darin angeordnete weitere Symbole für die Lagerzellen und oder Transportprozesse etc.) dargestellt sind. Dies ist dann sinnvoll, wenn eine längere komplexere Prozesskette vorliegt, um so einen Gesamtüberblick über die gesamte Prozesskette zu erhalten. Es kann dann über das Menü nach Belieben wieder ausschnittweise auf die hier dargestellte detailliertere Ebene zurückgesprungen werden.

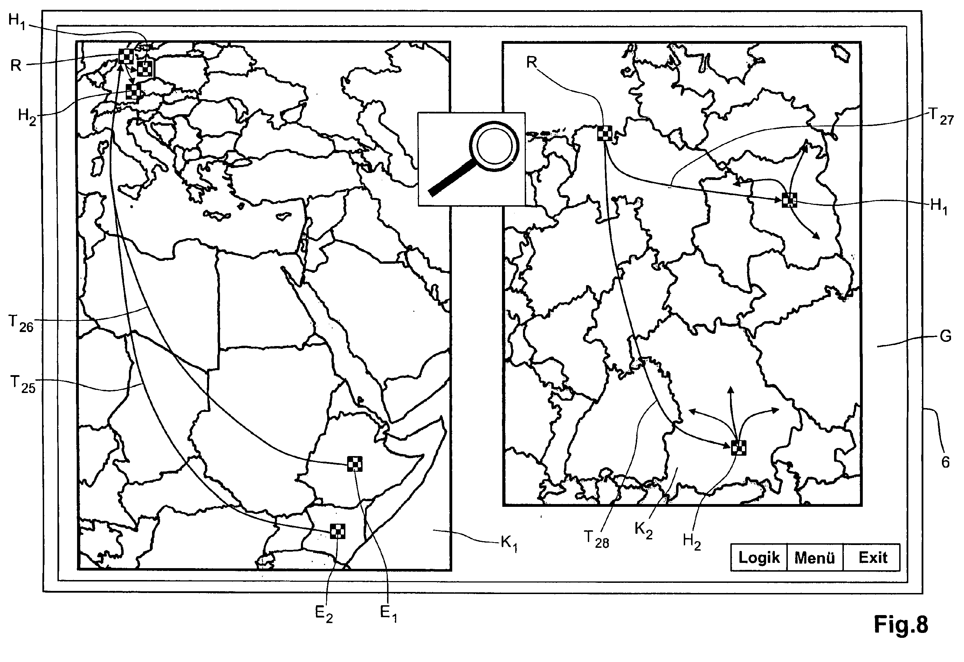

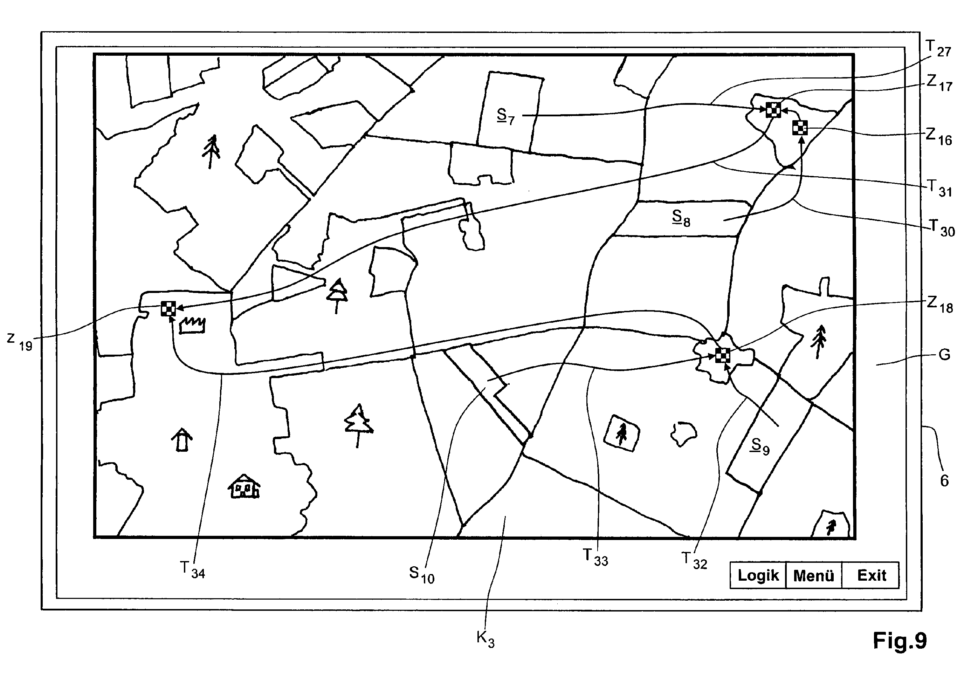

Neben dem Menü-Button befinden sich noch ein weiterer Button, um die gesamte Anwendung zu verlassen, sowie ein Button, um zu einer Kartendarstellung zu gelangen. Dies wird später noch anhand der Figuren 8 und 9 erläutert.

Wie aus Figur 2 ersichtlich ist, können die Symbole auch mit unterschiedlicher Tiefe dargestellt werden. So können beispielsweise die Symbole für die Transporte unmittelbar von einer Zelle zur konkreten nächsten Lagerzelle dargestellt werden. Es ist aber auch möglich, nur einen Transport zwischen den Betrieben anzuzeigen, wobei nicht genau spezifiziert ist, von welcher Lagerzelle bzw. von welchem Lager des Versenders aus der Transport zu genau welchem Lager bzw. welcher Lagerzelle des Empfängers erfolgt ist. Dies ist hier anhand der Transportprozesse T₂₀, T₂₁ zwischen den beiden Weiterverarbeitungsbetrieben B₃, B₄ und dem Händler B₅ dargestellt. Der Benutzer könnte durch Anklicken einer solchen Transportlinie T₂₀, T₂₁ - vorausgesetzt, er ist hierzu berechtigt - diese in eine detailliertere Darstellung auflösen, in der dann genau angezeigt wird, von welcher Lagerzelle Z₇, Z₈, ..., Z₁₂ zu welcher Lagerzelle Z₁₃, Z₁₄, Z₁₅ die Transporte erfolgt sind.

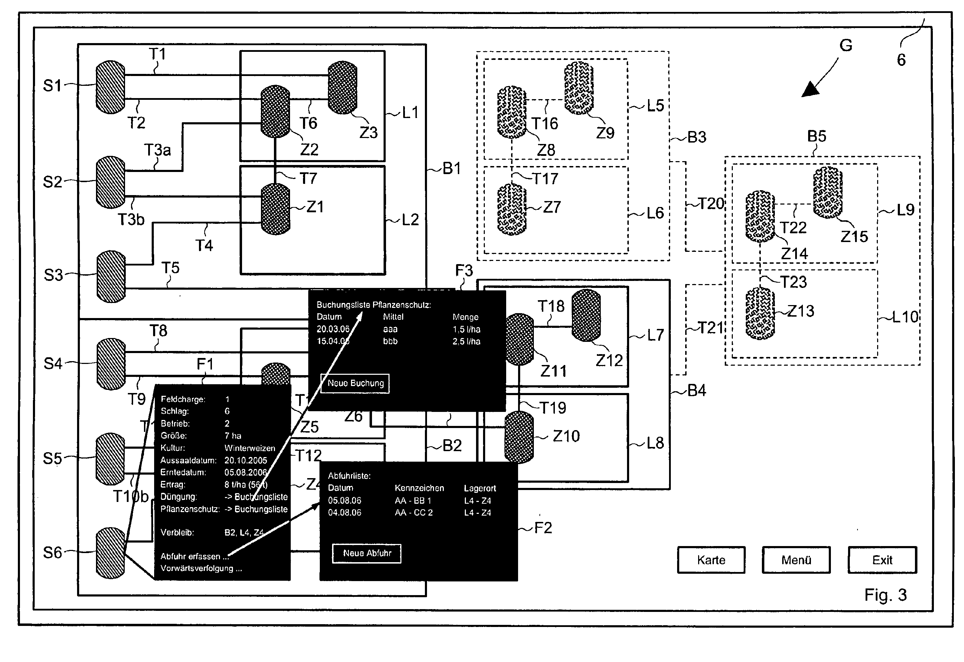

Mit Hilfe der Figuren 3 bis 7 wird im Folgenden anhand dieser in Figur 2 dargestellten grafischen Benutzeroberfläche erläutert, wie durch Anklicken der einzelnen Symbole Daten im Zusammenhang mit den durch die Symbole jeweils repräsentierten Lagerorte und/oder Prozesse über sogenannte "Kontextfenster" abgefragt oder Daten und Steuerbefehle hierzu eingegeben werden können.

Figur 3 zeigt dabei ein Beispiel, wie durch Anklicken eines Schlags S₆ eines bestimmten landwirtschaftlichen Erzeugerbetriebs B₂, beispielsweise durch Drücken der rechten Maustaste auf dieses Symbol S₆, ein Kontextfenster F₁ aufgerufen wird. Innerhalb dieses Kontextfensters F₁ können dann verschiedene Daten wie die Nummer des Betriebs, des Schlags, die Schlaggröße, das darauf erzeugte Erntegut, die geerntete Menge, die Erntezeit etc. abgefragt werden.

Außerdem enthalten die Informationen im Kontextfenster F₁ eine Chargennummer (hier "Feldcharge"), die die Charge auf dem betreffenden Schlag genau identifiziert. Eine solche Charge bzw. Partie hat in der Regel eine begrenzte Lebensdauer. Ein Beispiel für eine solche Charge ist das Getreide auf einem bestimmten Schlag in einem bestimmten Jahr. Ebenso kann z. B. in einem Lager eine Charge durch den Bestand in dem betreffenden Lager in einem bestimmten Zeitraum zwischen zwei völligen Leerzuständen definiert sein. Für die einzelnen Chargen können dabei, wie hier, alphanumerische Bezeichnungssysteme verwendet werden. Bei entsprechender Definition dieser Bezeichnungen, welche beispielsweise eine Kodierung der Zeitangabe, den Anbau- und/oder Lagerort enthalten, lassen sich diese Bezeichnungen auch automatisch erzeugen. Außerdem hat dies den Vorteil, dass die Chargenbezeichnungen in einen logischen Zusammenhang gebracht werden.

Da auf einem Schlag jedes Jahr ggf. mehrfach im Jahr neue Chargen erzeugt werden bzw. in einem Lager mehrere verschiedene Chargen pro Jahr aufgenommen werden können, ist es auch entsprechend möglich, in einem Fenster die Daten der verschiedensten Chargen ausgeben zu lassen bzw. zu editieren. Dies kann beispielsweise erfolgen, indem die Zeile mit der Chargennummer doppelt angeklickt wird. Es wird dann z. B. eine Liste mit den wichtigsten Daten wie Erntezeit und Erntegut angezeigt, so dass der Bediener dann die Charge auswählen kann, über die er weitere Informationen wünscht bzw. zu der er Daten oder Steuerbefehle eingeben möchte.

Ebenso sind hier Daten über den Verbleib der Charge angegeben, beispielsweise hier innerhalb des Betriebs B₂ im Lager L₄ in der Lagerzelle Z₄. Für bestimmte Angaben, wie zum Beispiel die verwendeten Dünge- und/oder Pflanzenschutzmittel oder für die Abfuhr des Ernteguts zum Zielort können durch Anklicken weitere Unter-Kontextfenster F₂, F₃ geöffnet werden. Dies wird hier an den Beispielen einer Buchungsliste für Pflanzenschutz und einer Abfuhrliste gezeigt. Durch Anklicken der Buttons "Neue Buchung" bzw. "Neue Abfuhr" können in den Fenstern F₂, F₃ weitere Vorgänge hinzugefügt werden.

Bei der Eingabe einer neuen Abfuhr kann im Dialog der Lagerort nicht nur per Tastatur, sondern auch durch Anklicken des Symbols der entsprechenden Lagerzelle erfolgen, sofern dieses schon im Netzdiagramm angelegt ist. Beim erstmaligen Buchen eines Transports zwischen zwei Symbolen wird dagegen automatisch die Verbindung zwischen den Symbolen generiert. Ebenso wird, wenn bei der Abfuhr vom Feld eine Lagerzelle angegeben wird, die in der logischen Sicht noch nicht bekannt ist, das Symbol für die Zelle und die Verbindung, d. h. das Symbol für den Transport zwischen Feld und Zelle automatisch erzeugt. Durch Eingabe von Daten in ein solches Fenster F₁, F₂, F₃ ist es also möglich, neue Symbole auf der grafischen Benutzeroberfläche anzulegen und diese mit dem aktivierten Symbol zu verknüpfen. Auf diese Weise ist die grafische Benutzeroberfläche automatisch an die reale Prozesskette anpassbar.

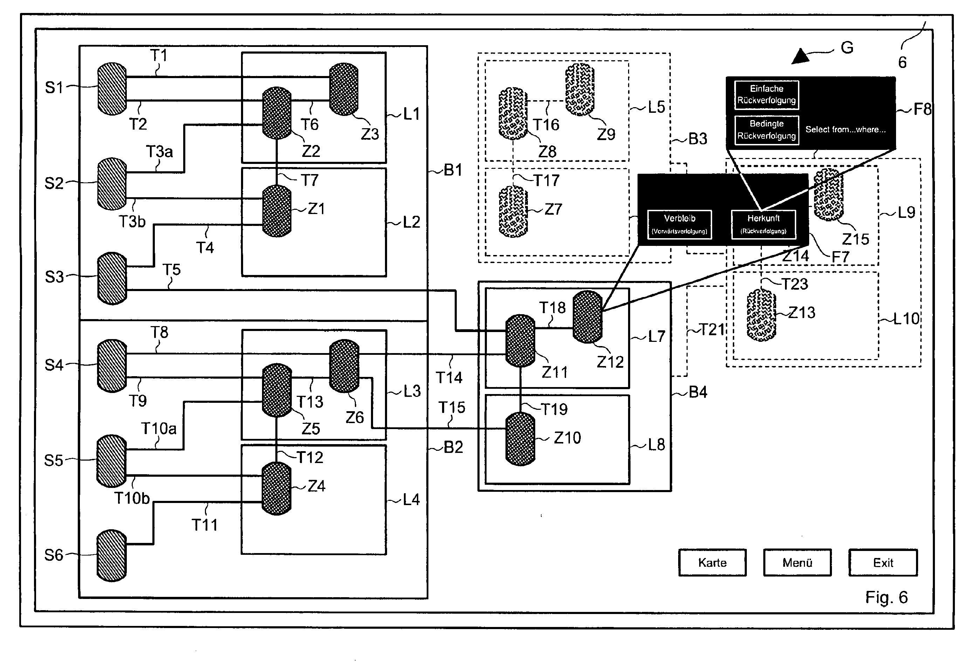

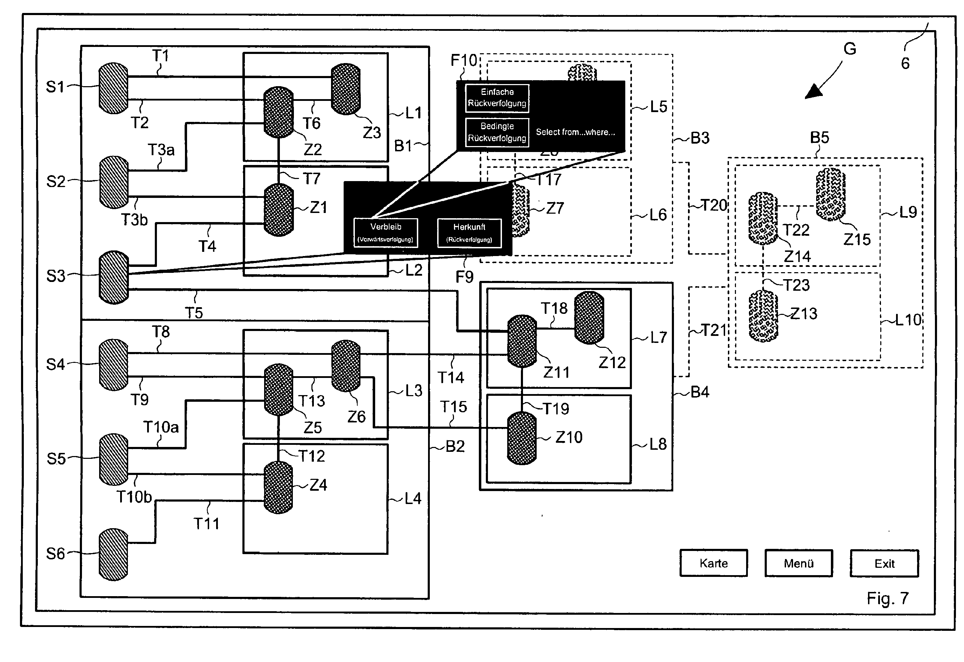

Schließlich befindet sich in dem Kontextfenster F₂ ein Aktivierungsbutton, um eine Vorwärtsverfolgung durchzuführen. Wird dieser Button aktiviert, so werden - wie dies später noch anhand der Figuren 6 und 7 erläutert wird - alle Symbole markiert, die die Prozesse oder Lagerorte betreffen, die von der betreffenden Charge durchlaufen wurden.

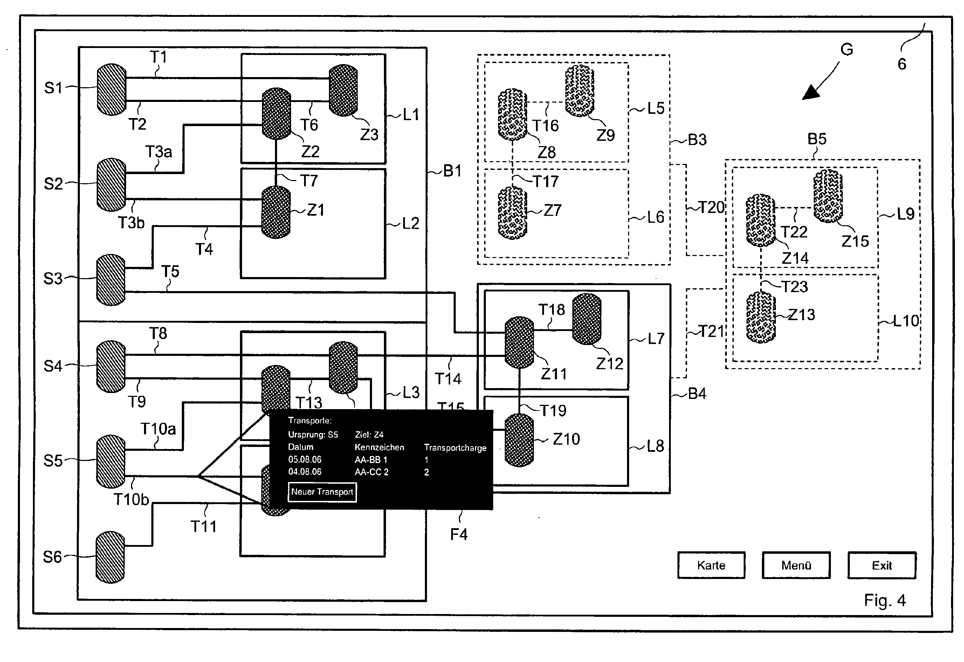

Figur 4 zeigt ein Beispiel, wenn ein Transportprozess-Symbol T_{10b}, hier die durchgezogene Transportlinie vom Schlag S₅ zur Lagerzelle Z₄, aktiviert wird. Es öffnet sich dann ein Kontextfenster F₄, in dem für diese Strecke die einzelnen Transporte mit Datum, Kennzeichen des verwendeten Transportfahrzeugs und Transportchargennummer angegeben werden. Durch Anklicken der einzelnen Daten können ggf. weitere detailliertere Informationen abgefragt werden. Beispielsweise können durch Anklicken des Kennzeichens des Transportfahrzeugs in einem neuen (nicht dargestellten) Kontextfenster Informationen über eine weitere Nutzung des Transportfahrzeugs abgefragt werden, wie z. B. zuvor mit diesem Fahrzeug durchgeführte Transporte und zwischen den einzelnen Transporten durchgeführte Reinigungsvorgänge. Durch Anklicken des Buttons "Neuer Transport" können Daten über weitere Transportvorgänge hinzugefügt werden bzw. Steuerbefehle zur Durchführung eines neuen Transports eingegeben werden.

Die Beispiele der Kontextfenster F₁,..., F₄ in den Figuren 3 und 4 zeigen, dass die Kontextfenster je nach Prozess bzw. Lagerort völlig unterschiedlich ausgestaltet sein können. Die Kontextfenster sollten so konfiguriert sein, dass die für den jeweiligen Prozess oder Lagerort wichtigsten Informationen angezeigt werden und über dieses Fenster abrufbar bzw. eingebbar sind. Auch kann die Menüstruktur, wie innerhalb des Fensters jeweils weitere Unterfenster erzeugt werden können, um detailliertere Informationen zu bestimmten Angaben zu erhalten bzw. einzugeben, unterschiedlich strukturiert sein. Ggf. können die Kontextfenster auch dynamisch in Abhängigkeit davon modifiziert werden, mit welchen Mitteln bzw. auf welche Weise bestimmte Prozesse durchgeführt werden oder ob beispielsweise zusätzlich bestimmte Prozesse (z. B. Trocknungsprozesse etc.) innerhalb eines Lagers erfolgen oder nicht.

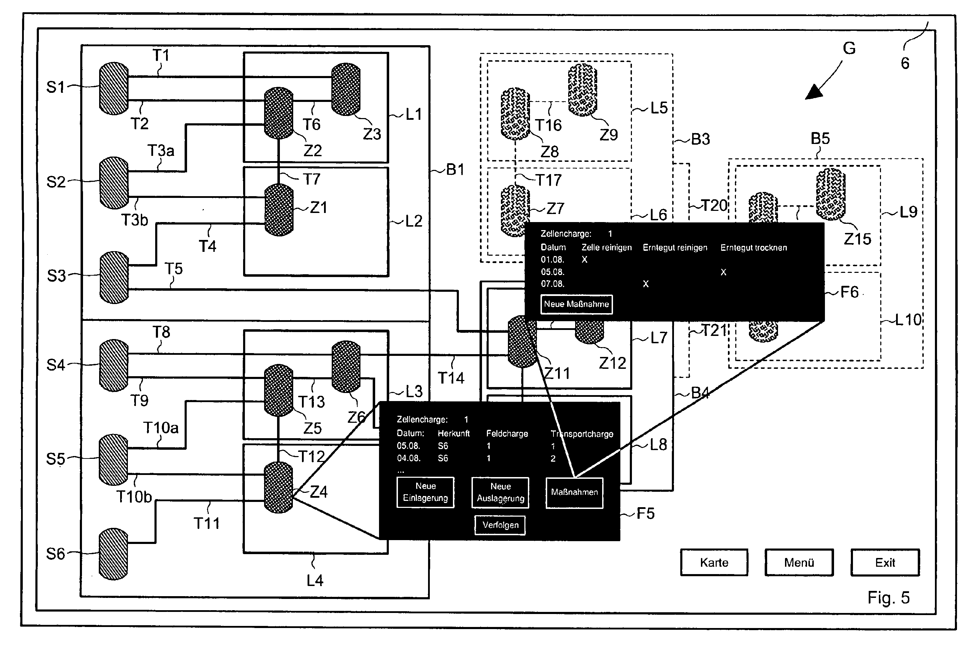

Figur 5 zeigt hierzu ein weiteres Beispiel bei Aktivierung einer Lagerzelle Z₄. Hier wird ein Kontextfenster F₅ geöffnet, in welchem neben der Chargennummer für das sich in dieser Lagerzelle befindliche Erntegut die Lagerzeit (Datum), der Erzeugerbetrieb (Herkunft), die jeweilige Feldchargennummer und die zugehörige Transportchargennummer angegeben werden. Über Buttons "Neue Einlagerung" und "Neue Auslagerung" lassen sich Daten bzw. Steuerbefehle über entsprechende neue Vorgänge eingeben. Über einen Button "Maßnahmen" kann ein weiteres Kontextfenster F₆ geöffnet werden, um innerhalb der Zelle durchgeführte bzw. durchzuführende Behandlungen wie Reinigungen, Trocknungsvorgänge etc. zu überwachen, zu dokumentieren und zu steuern.

Des Weiteren gibt es auch in diesem Fenster F₅ die Möglichkeit, durch Anklicken eines entsprechenden Buttons "Verfolgen" eine Charge vorwärts oder rückwärts zu verfolgen und sich innerhalb der Prozesskette markieren zu lassen, wo die betreffende Charge hingegangen ist bzw. auf welchem Hof eine bestimmte Charge oder auch alle sich derzeit in der Lagerzelle befindlichen Chargen erzeugt wurden.

Anhand der Figur 6 wird nun die Möglichkeit einer Zurückverfolgung erläutert. Die Zurückverfolgung erfolgt hier ausgehend von einem Symbol Z₁₂, welches eine Lagerzelle eines Weiterverarbeiters B₄ repräsentiert. Bei Aktivierung dieser Zelle Z₁₂ erscheint beispielsweise ein ähnliches Fenster wie es in Figur 5 dargestellt ist. Wenn der Benutzer dann innerhalb dieses Fensters den Verfolgungsbutton anklickt, so öffnet sich das in Figur 6 dargestellte Fenster F₇ für die Verfolgung. In diesem kann der Bediener zunächst auswählen, ob er eine Vorwärtsverfolgung oder eine Zurückverfolgung wünscht. Bei der Aktivierung der Zurückverfolgung öffnet sich ein weiteres Fenster F₈. Der Bediener kann dann eingeben, ob die Zurückverfolgung unter einer bestimmten Bedingung erfolgen soll oder nicht. In dem in Figur 6 dargestellten Beispiel wird davon ausgegangen, dass der Bediener keine Bedingung eingegeben hat. Es erfolgt dann eine Zurückverfolgung der betreffenden Charge bis zum Erzeugerort. Hierzu werden alle Symbole markiert, d. h. durch entsprechende auffällige farbige Darstellung, Schraffur oder auch durch eine Graudarstellung aller übrigen Symbole so hervorgehoben, dass eindeutig klar ist, mit welchen anderen Prozessen bzw. Lagerorten die betreffende Charge in diesem Lagerort verknüpft ist. Im dargestellten Fall ist durch eine Fettdarstellung erkennbar, dass die betreffende Charge bzw. Teile der Charge von den Schlägen S₃, S₄, S₅ und S₆ kommen und zuvor die Lagerzellen Z₄, Z₅, Z₆, Z₁₀ und Z₁₁ durchlaufen haben. Im Realfall erfolgt die Markierung vorzugsweise durch geeignete Farbdarstellung.

Figur 7 zeigt einen analogen Fall, bei dem ein Symbol S₃ eines Schlags aktiviert wurde, um mittels entsprechender Kontextfenster F₉, F₁₀ eine Vorwärtsverfolgung durchzuführen.

Bei einer bedingten Verfolgung kann der Bediener eine Zurückverfolgung nach Chargen durchführen, die mit einem bestimmten Pflanzenschutzmittel in Berührung gekommen sind. Es öffnet sich dann ein weiteres Fenster (nicht dargestellt), in dem für den Bediener das Pflanzenschutzmittel, für welches er sich interessiert, auswählbar ist. Klickt der Bediener das betreffende Pflanzenschutzmittel an bzw. gibt selber ein entsprechendes Pflanzenschutzmittel in einem Dialog ein, so werden nur die Symbole markiert, welche Prozesse bzw. Lagerorte repräsentieren, mit denen die Charge oder Teilmengen der Charge in Berührung gekommen sind, bei denen bei der Herstellung das betreffende Pflanzenschutzmittel eingesetzt wurde. Ebenso können z. B. bei einer bedingten Vorwärtsverfolgung Chargen verfolgt werden, die in einem bestimmten Produkt verarbeitet wurden.

Bei einer Verfolgung ist der Zeitpunkt von großer Bedeutung. Bei der Netzdarstellung wird normalerweise der aktuellen Zeitpunkt verwendet. Eine Rückverfolgung wird z. B. jedoch in der Regel erst nach Meldung eines aufgetretenen Problems durchgeführt. Daher ist es bei einer besonders bevorzugten Variante der Erfindung möglich, im Diagramm genau den Zustand zu einem beliebigen vorbestimmten Zeitpunkt darzustellen. Der Zeitpunkt kann beispielsweise in einem geeigneten Menü gewählt werden.

In den Figuren 2 bis 7 wurde jeweils eine rein logische Darstellung für die Prozesskette gewählt. Wie bereits oben erwähnt, kann aber durch Anwählen eines entsprechenden "Kartenbuttons" (hier links unten in der grafischen Benutzeroberfläche G) auch eine Kartendarstellung gewählt werden. Dies wird anhand der Figuren 8 und 9 erläutert. Anstelle des Kartenbuttons erscheint dann an der entsprechenden Stelle links unten in der Benutzeroberfläche ein "Logikbutton", über den der Benutzer sofort wieder in die logische Darstellung wechseln kann.

Figur 8 zeigt zudem, dass das System nicht nur lokal, sondern auch global einsetzbar ist. Auf der linken Seite der Benutzeroberfläche ist dabei eine Prozesskette dargestellt, bei der von zwei Erzeugerbetrieben aus Äthiopien und Kenia Kaffee an eine Rösterei in Bremerhaven versandt wurde. Die Erzeuger sind hier jeweils durch einfache Symbole E1, E2 dargestellt. Die Rösterei ist durch ein Symbol R dargestellt. Die Transportprozesse sind durch einfache Linien T₂₅, T₂₆ dargestellt. Auch hier können die einzelnen Symbole E₁, E₂, R, T₂₅, T₂₆ - wie bei der logischen Darstellung gemäß den Figuren 2 bis 7 - aktiviert werden, um entsprechende Kontextfenster zu öffnen, in denen Daten abgefragt bzw. ediert werden können.

Von der Rösterei R werden dann die gerösteten Kaffeebohnen an Händler geliefert. Dies ist in einer vergrößerten Darstellung zu sehen, die auf der rechten Hälfte der Benutzeroberfläche G dargestellt ist. Die Händler befinden sich hier in Berlin und München, was wieder durch entsprechende Symbole H₁, H₂ dargestellt ist. Ebenso sind auch hier wieder die Transportvorgänge durch entsprechende Liniensymbole T₂₇, T₂₈ dargestellt. Von den einzelnen Händlern H₁, H₂ kann dann eine Verteilung an die Einzelhändler erfolgen, was ebenfalls durch Symbole darstellbar ist (hier jeweils nur durch drei Transportlinien angedeutet).

Wird mit Hilfe einer geeigneten Zoomfunktion die Darstellung beispielsweise im Bereich der Erzeuger noch weiter vergrößert, kann sich auch die Symbolik passend ändern, so dass anstelle eines Symbols E₁, E₂ für den betreffenden Erzeuger eine Vielzahl von einzelnen Symbolen erscheint, welche die verschiedenen Plantagen und die Zwischenlager repräsentieren, in denen die einzelnen Chargen geerntet, gelagert und für den weiteren Transport nach Bremerhaven abgefertigt wurden.

In der hier gewählten Darstellung sind die Symbole T₂₅, T₂₆ für die Transportprozesse von den Erzeugern zur Rösterei nur durch einfache schematische Linien dargestellt. Selbstverständlich ist es auch möglich, einzelne Transportprozesse zu den Lagern in den Verschiffungshäfen mit separaten Symbolen und dementsprechend auch die Lager an den Verschiffungshäfen durch Symbole darzustellen. Das Symbol für den Schiffstransport vom jeweiligen Verschiffungshafen bis zum Ankunftshafen kann auch als eine Linie entlang der tatsächlich gefahrenen Route ausgeführt sein. Auf diese Weise lässt sich später leichter nachverfolgen, welche Produkte tatsächlich mit welchen geografischen Orten zu bestimmten Zeiten in Berührung gekommen sind bzw. sein könnten.

Figur 8 zeigt ein Beispiel, wie sich die Symbole bei einer starken Vergrößerung der Kartendarstellung ändern können. Dargestellt ist hier ein Vorgang, bei dem von zwei Höfen Erntegut an einen Landhandel geliefert wird. Die Schläge werden hierbei jeweils durch Symbole S₇, S₈, S₉, S₁₀ repräsentiert, welche genau die Umrisslinien des Schlages in der Karte K₃ anzeigen. Das auf dem Schlag S₇ geerntete Erntegut wird über einen Transportweg T₂₉ zu einer ersten Lagerzelle Z₁₇ gebracht. Das auf dem Schlag S₈ geerntete Erntegut wird über den Transportweg T₃₀ zunächst in eine Lagerzelle Z₁₇ gebracht und von da in die Lagerzelle Z₁₆ umgelagert. Von dort erfolgt über den Transportweg T₃₁ der Transport zum Lager eines Landhandels mit dem Symbol Z₁₉. In ähnlicher Weise werden vom Schlag S₁₀ das Erntegut über den Transportweg T₃₃ und das Erntegut vom Schlag S₉ über den Transportweg T₃₂ zur Lagerzelle Z₁₈ gebracht. Von dort wird über den Transportweg T₃₄ das gesamte Erntegut ebenfalls zum Lagerort Z₁₉ des Landhandels transportiert.

Mit dem erfindungsgemäßen System bzw. dem erfindungsgemäßen Verfahren ist es also möglich, Prozessketten auf einfache Weise zu überwachen und - soweit notwendig - zu steuern. Die Bedienung des Systems ist dabei intuitiv, so dass der Bediener auch über sehr komplexe Prozessketten jederzeit den Überblick behalten kann. Insbesondere ist es möglich, einzelne Chargen beliebig zu verfolgen und zu prüfen, was mit diesen passiert ist bzw. mit welchen Stoffen die jeweiligen Chargen in Berührung gekommen sind. Das System gewährleistet dabei eine lückenlose Dokumentation, wobei die Dokumentation auch jederzeit effektiv zur Gewinnung von Informationen über einzelne Produkte genutzt werden kann.

Es wird abschließend noch einmal darauf hingewiesen, dass es sich bei dem in den Figuren dargestellten System und den grafischen Benutzeroberflächen sowie den im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen. Insbesondere ist es bei einer bevorzugten Variante möglich, dass ein Bediener das System zum großen Teil selbst konfigurieren kann. So kann er beispielsweise selbst Symbole kreieren bzw. aus einer Liste von möglichen Symbolen für bestimmte Prozesse oder Lagerorte auswählen, um so das System auf seine Bedürfnisse zuzuschneiden. Weiterhin können auch die einzelnen Kontextfenster bzw. die Menüstrukturen, die bei Aktivieren einzelner Symbole über die Fenster aufgerufen werden, verändert werden, und es kann z. B. eingestellt werden, wann welche Angaben in welcher Informationstiefe ausgegeben werden bzw. eingebbar sind. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

### Bezugszeichenliste

- 1: Steuerungs- und Kontrollsystem
- 2: Zentralrechner
- 3: Funkschnittstelle
- 4: Funkschnittstelle
- 5: Speichereinrichtung
- 6: Anzeigeeinrichtung
- 7: Touchpad
- 8: Taste
- 9: Taste
- 10: Bedieneinheit
- 11: Ein/Ausschalter
- 12: Teil-Grafikeinheit
- 13: Funkschnittstelle
- 14: landwirtschaftliche Maschine
- 15: Funkschnittstelle
- 16: Transportfahrzeug
- 17: Funkschnittstelle
- 18: Silo
- 19: Silo
- 20: Teil-Grafikeinheit
- 21: Steuersignalermittlungseinheit
- G: grafische Benutzeroberfläche
- P: Prozesskette
- R: Rösterei
- S: Schlag
- D_{L}: Lagerungsdaten
- D_{P}: Prozessdaten
- MZ: Mauszeiger
- SB: Steuerbefehl
- VSB: Verfolgungs-Steuerbefehl
- B₁, B₂: Erzeugerbetriebssymbole
- B₃, B₄: Weiterverarbeitungsbetriebssymbole
- B₅: Händlerbetriebssymbole
- E₁, E₂: Erzeugersymbole
- F₁, F₂, ... , F₁₀: Kontextfenster
- H₁, H₂: Händlersymbole
- K₁, K₂, K₃: Karte
- L₁, L₂, ... , L₁₀: Lagersymbole
- S₁, S₂, ... , S₁₀: Schlagsymbole
- SS₁, SS₂: Steuersignale
- T₁, T₂, ... , T₃₄: Transportprozesssymbole
- Z₁, Z₂, ... , Z₁₉: Lagerzellensymbole

## Patentansprüche

1. Verfahren zur rechnerunterstützten Steuerung und Überwachung einer Prozesskette (P) zur Behandlung landwirtschaftlicher Produkte, bei dem Prozessdaten (D_{P}) für verschiedene Prozesse und Lagerungsdaten (D_{L}) für verschiedene Lagerorte innerhalb der Prozesskette (P) in einer Speichereinrichtung hinterlegt werden
und den einzelnen Prozessen und Lagerorten auf Basis der Prozessdaten (D_{P}) und Lagerungsdaten (D_{L}) Symbole (B₁, B₂, ..., B₅, E₁, E₂, ^{H}₁, H₂, L₁, L₂, ..., ^{L}₁₀, R, S₁, S₂, ..., S₁₀, T₁, T₂, ..., T₃₄, Z₁, Z₂, ..., Z₁₉) zur Ausgabe auf einer graphischen Benutzeroberfläche (G) zugeordnet werden, welche die betreffenden Prozesse und Lagerorte repräsentieren,
wobei die Symbole (B₁, B₂, ..., B₅, E₁, E₂, H₁, H₂, L₁, L₂, ..., L₁₀, R, S₁, S₂, ..., S₁₀, T₁, T₂, ..., T₃₄, Z₁, Z₂, ..., Z₁₉) auf der graphischen Benutzeroberfläche (G) so ausgegeben werden, dass die Symbole (B₁, B₂, ..., B₅, E₁, E₂, H₁, H₂, L₁, L₂, ..., L₁₀, R, S₁, S₂, ..., S₁₀, T₁, T₂, ..., T₃₄, Z₁, Z₂, ..., Z₁₉) von aufeinander folgenden Prozessen und Lagerorten grafisch miteinander verknüpft werden.

2. Verfahren nach Anspruch 1, bei dem bestimmten Prozessen Symbole (T₁, T₂, ..., T₃₄) zugeordnet sind, mit denen verschiedenen Lagerorten und/oder anderen Prozessen zugeordnete Symbole (B₁, B₂, ..., B₅, E₁, E₂, H₁, H₂, L₁, L₂, ..., L₁₀, R, S₁, S₂, ..., S₁₀, Z₁, Z₂, ..., Z₁₉) auf der graphischen Benutzeroberfläche (G) untereinander verknüpft sind.

3. Verfahren nach Anspruch 1 oder 2, bei dem zumindest bestimmte Symbole (S₃, S₆, T₁₀, Z₄, Z₁₂) auf der graphischen Benutzeroberfläche (G) mittels eines Bedienelements (10) zur Erfassung und/oder Ausgabe von Prozessdaten (D_{P}) und/oder Lagerdaten (D_{L}) und/oder Steuerbefehlen (SB) und/oder darauf basierenden Daten aktivierbar sind.

4. Verfahren nach Anspruch 3, bei dem auf Basis von erfassten Steuerbefehlen (SB) automatisch Steuersignale (SS₁, SS₂) generiert und an in der Prozesskette (K) zur Verfügung stehende Arbeitsaggregate (14, 16) übermittelt werden.

5. Verfahren nach Anspruch 3 oder 4, bei dem auf Basis von Prozessdaten (D_{P}) und/oder Lagerdaten (D_{L}) und/oder Steuerbefehlen (SB) und/oder darauf basierenden Daten, die nach einer Aktivierung eines Symbols eines ersten Prozesses oder Lagerorts mittels der grafischen Benutzeroberfläche (G) erfasst werden, ein Symbol für zumindest einen weiteren Prozess oder Lagerort auf der graphischen Benutzeroberfläche (G) generiert und mit dem Symbol des ersten Prozesses oder Lagerorts verknüpft wird.

6. Verfahren nach einem der Ansprüche 1 bis 5, bei dem auf Basis eines Verfolgungs-Steuerbefehls (VSB) alle in direkter Linie innerhalb einer Prozesskette (P) verknüpften Symbole (S₃, S₄, S₅, S₆, T₄, T₅, T₇, T₈, T₉, T₁₀ₐ, T_{10b}, T₁₁, T₁₂, T₁₃, T₁₄, T₁₅, T₁₈, T₁₉, Z₁, Z₂, Z₃, Z₁₉, Z₅, Z₆, Z₁₀, Z₁₁ Z₁₂) ausgehend von einem Startsymbol (S₃, Z₁₂) in zumindest einer bestimmten Richtung der Prozesskette (P) markiert werden.

7. Verfahren nach einem der Ansprüche 1 bis 6, bei dem auf Basis eines Verfolgungs-Steuerbefehls (VSB) solche Symbole (S₃, S₄, S₅, S₆, T₄, T₅, T₇, T₈, T₉, T₁₀ₐ, T_{10b}, T₁₁, T₁₂, T₁₃, T₁₄, T₁₅, T₁₈, T₁₉, Z₁, Z₂, Z₃, Z₁₉, Z₅, Z₆, Z₁₀, Z₁₁, Z₁₂) markiert werden, deren Prozesse oder Lagerorte ein bestimmtes Merkmal oder eine bestimmte Merkmalskombination aufweisen.

8. Verfahren nach einem der Ansprüche 1 bis 7, bei dem die Prozesse und Lagerorte jeweils bestimmten Prozessbereichen zugeordnet werden und die zugehörigen Symbole auf der grafischen Benutzeroberfläche (G) entsprechend gruppiert positioniert werden.

9. Verfahren nach einem der Ansprüche 1 bis 8, bei dem die Prozesse und/oder Lagerorte mit geografischen Ortsdaten verknüpft sind und die Symbole (E₁, E₂, H₁, H₂, R, S₇, S₈, S₉, S₁₀, T₂₅, T₂₆, ..., T₃₄, Z₁₆, Z₁₇ Z₁₈, Z₁₉) auf der grafischen Benutzeroberfläche (G) in einem kartografischen Umfeld (K₁, K₂, K₃) ausgegeben werden.

10. Verfahren nach Anspruch 9, bei dem die Symbole (S₇, S₈, S₉, S₁₀) für bestimmte Prozesse oder Lagerorte jeweils Begrenzungsmarkierungen eines innerhalb einer geografischen Karte (K₃) dargestellten Bereichs umfassen, an dem der betreffende Prozess durchgeführt wird oder sich der betreffende Lagerort befindet.

11. Verfahren nach einem der Ansprüche 1 bis 10, bei dem die Anzeige und/oder Aktivierbarkeit eines Symbols (B₁, B₂, ..., B₅, E₁, E₂, H₁, H₂, L₁, L₂, ..., L₁₀, R, S₁, S₂, ..., S₁₀, T₁, T₂, ..., T₃₄, Z₁, Z₂, ..., Z₁₉) basierend auf Autorisierungsdaten eines Benutzers erfolgt.

12. Steuerungs- und Kontrollsystem (1) zur Steuerung und Überwachung einer Prozesskette (K) zur Behandlung landwirtschaftlicher Produkte, mit
- einer Schnittstellenanordnung (3, 4, 6, 10, G), um Prozessdaten (D_{P}) für verschiedene Prozesse und Lagerungsdaten (D_{L}) für verschiedene Lagerorte innerhalb der Prozesskette (P) zu erfassen,
- einer Speichereinrichtung (5), um die Prozessdaten (D_{P}) für die verschiedenen Prozesse und die Lagerungsdaten (D_{L}) für die verschiedenen Lagerorte zu hinterlegen,
- einer Anzeigeeinrichtung (6),
- eine Grafikeinheit (12) zur Generierung einer grafischen Benutzeroberfläche (G) auf der Anzeigeeinrichtung (6), wobei die Grafikeinheit (12) so ausgebildet ist, dass den einzelnen Prozessen und Lagerorten auf Basis der Prozessdaten (D_{P}) und Lagerungsdaten (D_{L}) Symbole (B₁, B₂, ..., B₅, E₁, E₂, H₁, H₂, L₁, L₂, ..., L₁₀, R, S₁, S₂, .... S₁₀, T₁, T₂, ..., T₃₄, Z₁, Z₂, ..., Z₁₉) zur Ausgabe auf der grafischen Benutzeroberfläche (G) zugeordnet werden, welche die betreffenden Prozesse und Lagerorte repräsentieren,
und dass die Symbole (B₁, B₂, ..., B₅, E₁, E₂, H₁, H₂, L₁, L₂, ..., L₁₀, R, S₁, S₂, ..., S₁₀, T₁, T₂, ..., T₃₄, Z₁, Z₂, ..., Z₁₉) auf der grafischen Benutzeroberfläche (G) so ausgegeben werden, dass die Symbole (B₁, B₂, ..., B₅, E₁, E₂, H₁, H₂, L₁, L₂, ..., L₁₀, R, S₁, S₂, ..., S₁₀, T₁, T₂, ..., T₃₄, Z₁, Z₂, ..., Z₁₉) von aufeinander folgenden Prozessen und Lagerorten grafisch miteinander verknüpft werden.
